# EUROPEAN PATENT SPECIFICATION

(11) **EP 3 726 327 B1**
(45) Date of publication and mention of the grant of the patent: **28.02.2024**
(21) Application number: 18888640.2
(22) Date of filing: 13.12.2018
(51) Int. Cl.: G05D 1/02, G08G 1/14, B62D 15/02

(54) **SYSTEM AND METHOD FOR USE IN AUTOMATICALLY PARKING VEHICLE INTO BATTERY EXCHANGE SPACE WITHIN BATTERY EXCHANGE STATION, AND ELECTRIC VEHICLE**
SYSTEM UND VERFAHREN ZUR AUTOMATISCHEN EINPARKHILFE IN EINEN BATTERIEWECHSELRAUM INNERHALB EINER BATTERIEWECHSELSTATION UND ELEKTROFAHRZEUG
SYSTÈME ET PROCÉDÉ DESTINÉS À ÊTRE UTILISÉS POUR STATIONNER AUTOMATIQUEMENT UN VÉHICULE DANS UN ESPACE D'ÉCHANGE DE BATTERIE À L'INTÉRIEUR D'UNE STATION D'ÉCHANGE DE BATTERIE, ET VÉHICULE ÉLECTRIQUE

(30) Priority: 15.12.2017 CN 201711346800
(43) Date of publication of application: 21.10.2020
(73) Proprietor: NIO (Anhui) Holding Co., Ltd., Hefei City, Anhui Province (CN)
(72) Inventor: LI, Qian, Shanghai (CN)
(74) Representative: Vossius & Partner Patentanwälte Rechtsanwälte mbB
(86) International application number: PCT/CN2018/120925
(87) International publication number: WO 2019/114794

(56) References cited:
- EP-A1- 2 100 778
- EP-A1- 3 153 384
- CN-A- 101 573 257
- CN-A- 102 508 489
- CN-A- 105 142 962
- CN-A- 105 263 741
- CN-A- 106 560 364
- CN-A- 107 399 302
- JP-A- 2017 024 596

## Description

### Technical Field

The invention relates to the field of vehicles, in particular to a system and a method for automatically parking a vehicle in a battery swap parking space within a battery swap station, and an electric vehicle.

### Background Art

A big problem that the popularization of electric vehicles is faced with lies in insufficient endurance mileage and more time-consuming charging compared with refueling. The problem may be better solved by a battery replacement solution and better experience than refueling may also be obtained, and a vehicle owner may only spend on battery swapping about as much time as the refueling. However, a parking space in a power swap station is relatively narrow, such that manual parking into the power swap station requires a skilled driver, the requirement is high for the driver, and unsafe hidden dangers may be caused by collision possible during the parking. EP 2 100 778 A1 relates to a parking assistance apparatus and, in particular, a parking assistance apparatus that performs a parking assist by recognizing a relative positional relation between a vehicle and a target parking position. CN 107 399 302 A relates to a battery charging and swapping station and a battery swapping method. EP 3 153 384 A1 relates to a parking guidance apparatus and method for providing parking guidance for a vehicle.

### Summary of the Invention

The invention is implemented to overcome one or more of the shortcomings or other shortcomings, and the adopted technical solutions are as follows. The present invention is defined in the claims.

According to one aspect of the invention, there is provided a system for automatically parking a vehicle into a battery swap parking space within a battery swap station, comprising:
an image acquiring unit configured to acquire an image of the ground around a vehicle; and
a control unit configured to determine, on the basis of the acquired image, whether the vehicle is located within a parking start area determined by means of prearranged first ground marks, to determine a position of the vehicle relative to the first ground marks if it is determined that the vehicle is located within the parking start area, to determine, on the basis of the position, a parking path for traveling from the position to the battery swap parking space within the battery swap station, and to control the vehicle to perform a parking operation according to the parking path.

Further, according to one aspect of the invention,
the parking path comprises advancing from the position Pt1 (x1, y1) to a position Pt2 (x2, y2), next reversing to a position Pt3 (x3, y3), then traveling to a position Pt4 (x4, y4) in a curve, and finally traveling straight into the battery swap parking space,
wherein with the width direction of the battery swap parking space as an x-axis direction and the length direction of the battery swap parking space as a y-axis direction, the x1, x2, x3, x4, y1, y2, y3 and y4 satisfy the following relationship:
x1 min < x1 < x1 max and y1 min < y1 < y1 max, wherein x1 min, x1 max, y1 min and y1 max represent constants determined according to the length and width of the battery swap parking space;
x2 > half of the width of the battery swap parking space + a minimum turning radius which can be reached by the vehicle, and y2 = y1;
x3 = x2 - Delta X and y3 = y1, wherein Delta X represents a constant determined according to the movement speed of the vehicle advancing from Pt1 to Pt2; and
x4 = x3 - the turning radius of the vehicle, and y4 = y2 - the turning radius of the vehicle.

According to the invention, the system further comprises:
a display unit configured to display information for prompting a driver to adjust the position of the vehicle if the control unit determines that the vehicle is not located within the parking start area.

Further, according to one aspect of the invention, the control unit is further configured to determine whether the vehicle accurately reaches the position Pt4.

Further, according to one aspect of the invention, if it is determined that the vehicle does not accurately reach the position Pt4, an image of the ground around the vehicle is reacquired by the image acquiring unit, the position of the vehicle relative to second ground marks is determined by the control unit based on the reacquired image, and the position is finely adjusted such that the vehicle is allowed to go straight into the battery swap parking space, wherein the second ground marks are determined on the basis of the position of the battery swap parking space.

According to another aspect of the invention, there is provided a method for automatically parking a vehicle into a battery swap parking space within a battery swap station, comprising:
a step of acquiring an image of the ground around the vehicle;
a step of determining, on the basis of the acquired image, whether the vehicle is located in a parking start area determined by means of prearranged first ground marks;
a step of determining the position of the vehicle relative to the first ground marks if it is determined that the vehicle is located in the parking start area;
a step of determining a parking path for traveling from the position to the battery swap parking space within the battery swap station based on the position; and
a step of controlling the vehicle to perform a parking operation according to the parking path.

Further, according to another aspect of the invention,
the parking path comprises advancing from the position Pt1 (x1, y1) to a position Pt2 (x2, y2), next reversing to a position Pt3 (x3, y3), then traveling to a position Pt4 (x4, y4) in a curve, and finally traveling straight into the battery swap parking space,
wherein with the width direction of the battery swap parking space as an x-axis direction and the length direction of the battery swap parking space as a y-axis direction, the x1, x2, x3, x4, y1, y2, y3 and y4 satisfy the following relationship:
x1 min < x1 < x1 max and y1 min < y1 < y1 max. According to the invention, x1 min, x1 max, y1 min and y1 max represent constants determined according to the length and width of the battery swap parking space;
x2 > half of the width of the battery swap parking space + a minimum turning radius which can be reached by the vehicle, and y2 = y1;
x3 = x2 - Delta X and y3 = y1, wherein Delta X represents a constant determined according to the movement speed of the vehicle advancing from Pt1 to Pt2; and
x4 = x3 - the turning radius of the vehicle, and y4 = y2 - the turning radius of the vehicle.

According to the invention, the method further comprises:
a step of displaying information for prompting the driver to adjust the position of the vehicle if it is determined that the vehicle is not located in the parking start area.

Further, according to another aspect of the invention, the method further comprises:
a step of determining whether the vehicle accurately reaches the position Pt4.

Further, according to another aspect of the invention, if it is determined that the vehicle does not accurately reach the position Pt4, an image of the ground around the vehicle is reacquired, the position of the vehicle relative to second ground marks is determined based on the reacquired image, and the position is finely adjusted such that the vehicle is allowed to go straight into the battery swap parking space, wherein the second ground marks are determined based on the position of the battery swap parking space.

According to a further aspect of the invention, there is provided an electric vehicle, characterized in that it comprises the above system according to one aspect of the invention.

Compared with the prior art, one or more of the following beneficial effects may be obtained:
(1) according to the invention, the vehicle is allowed to be quickly, accurately and automatically parked into the battery swap station for battery swapping;
(2) according to the invention, by means of high-precision positioning of the vehicle based on the image acquiring unit such as a camera and accurate control in the lateral and longitudinal directions, it is possible to avoid vehicle collision during the whole parking so as to ensure vehicle safety.

### Brief Description of the Drawings

Fig. 1 is an exemplary block diagram of a system for automatically parking a vehicle into a battery swap parking space within a battery swap station according to an embodiment of the invention.
Fig. 2 is a schematic view illustrating ground marks and a parking path according to an embodiment of the invention.
Fig. 3 is an exemplary flow diagram of a method for automatically parking a vehicle into a battery swap parking space within a battery swap station according to an embodiment of the invention.

### Detailed Description of Embodiments

A system and a method for automatically parking a vehicle into a battery swap parking space within a battery swap station, and an electric vehicle that the invention relates to will be described below in further detail with reference to the accompanying drawings. It should be noted that the following detailed description of embodiments are exemplary rather than limiting, and are intended to provide a basic understanding of the invention, and are not intended to confirm key or decisive elements of the invention or limit the scope of protection thereof.

The invention is described below with reference to block diagram illustrations, block diagrams, and/or flowcharts of methods and apparatuses of embodiments of the invention. It will be understood that each block of the flowcharts and/or the block diagrams, and combinations of the flowcharts and/or block diagrams can be implemented by computer program instructions. These computer program instructions may be provided to a processor of a general purpose computer, special purpose computer, or other programmable data processing equipment to form a machine, such that the instructions, when executed by the processor of the computer or other programmable data processing equipment, create means for carrying out the functions/operations specified in the flowcharts and/or blocks and/or one or more flow block diagrams.

These computer program instructions may be stored in a computer-readable memory and may instruct a computer or other programmable processors to function in a particular way, such that the instructions stored in the computer-readable memory constitute manufactured products including the instruction means for implement the functions/operations specified in one or more blocks of the flowcharts and/or block diagrams.

These computer program instructions may be loaded onto a computer or other programmable data processors to cause a series of operation steps to be performed on the computer or other programmable processors so as to produce computer implemented processes, such that the instructions executed on the computer or other programmable data processors provide steps for implementing the functions or operations specified in one or more blocks of the flowcharts and/or block diagrams. It should also be noted that in some alternatives, the functions/operations illustrated in the blocks may not be carried out in the order illustrated in the flowcharts. For example, two blocks shown in succession may in fact be executed substantially simultaneously or the blocks may sometimes be executed in a reverse order, specifically depending upon the functions/operations involved.

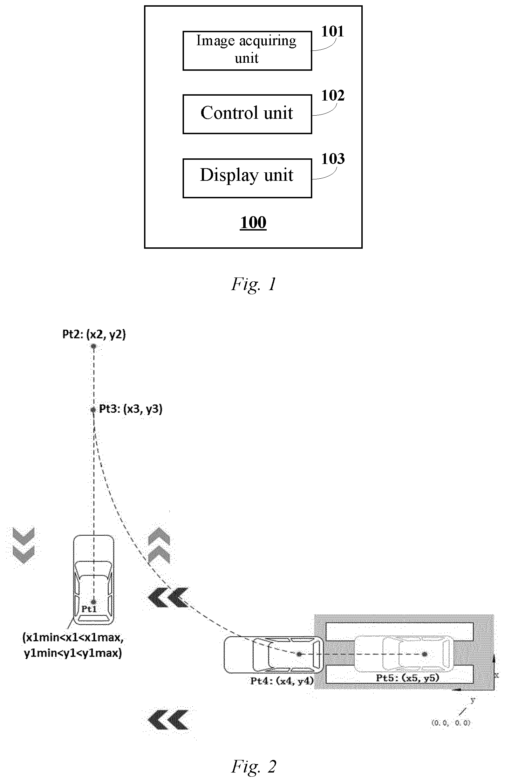

The system for automatically parking the vehicle into the battery swap parking space within the battery swap station according to an embodiment of the invention will be described below with reference to Fig. 1.

Fig. 1 is an exemplary block diagram of a system for automatically parking a vehicle into a battery swap parking space within a battery swap station according to an embodiment of the invention. As shown in Fig. 1, the system 100 comprises an image acquiring unit 101 configured to acquire an image of the ground around the vehicle. In an example, the image acquiring unit 101 may be a camera, but is not limited thereto, and any component capable of capturing an image of the ground around the vehicle may also be used to implement the image acquiring unit 101.

In an embodiment, as shown in Fig. 1, the system 100 may further comprise a control unit 102 configured to determine, on the basis of the acquired image, whether the vehicle is located within a parking start area determined by means of prearranged first ground marks, to determine a position of the vehicle relative to the first ground marks if it is determined that the vehicle is located within the parking start area, to determine, on the basis of the position, a parking path for traveling from the position to the battery swap parking space within the battery swap station, and to control the vehicle to perform a parking operation according to the parking path. In an example, the control unit 102 may be an electronic control unit (ECU), but is not limited thereto, and any component capable of controlling the entire vehicle may also be used to implement the control unit 102.

The above-mentioned operations of the system 100 is schematically illustrated in Fig. 2 as an example.

As shown in Fig. 2, the image acquiring unit 101 of the vehicle acquires for example the image of the ground around the vehicle periodically, and the control unit 102 determines, based on the acquired image, whether the vehicle is located in the parking start area determined by means of the prearranged ground marks extending along the x-axis. The parking start area may be characterized for example by the range of values of horizontal and vertical coordinates of Pt1, that is, in the case where the width direction of the battery swap parking space (the vehicle position where a point Pt5 is located at the lower right in Fig. 2) is taken as the x-axis direction and the length direction of the battery swap parking space is taken as the y-axis direction, as long as the vehicle is located in an area defined by x1 min to x1 max and y1 min to y1 max (wherein x 1 min, x1 max, y1 min and y1 max are constants), it may be determined that the vehicle is located in the parking start area in which the image acquiring unit 101 can accurately identify the ground marks extending along the x-axis. In addition, with regards to the values of x1 min, x1 max, y1 min and y1 max, upon determining the length and width of the battery swap parking space, the ground marks extending along the x-axis are determined, and x1 min, x1 max, y1 min and y1 max are also determined accordingly.

The position of the vehicle relative to the ground marks extending along the x-axis is determined if it is determined that the vehicle is already located in the parking start area, and the parking path for traveling from the position to the battery swap parking space within the battery swap station is determined based on the position. With regards to the parking path, for example, as shown in Fig. 2, it is assumed that the vehicle is parked at the position of the point Pt1, at this point, it is determined, based on the current position, that the vehicle travels straight in the forward X-axis direction to a point Pt2 (x2, y2) from the current position as a start point, next travels straight in the reverse X-axis direction from the point Pt2 to a point Pt3 (x3, y3), then is driven to a position Pt4 (x4, y4) along a curve trajectory, and finally directly enters the parking path for the battery swap parking space (the vehicle position where the Pt5 point is located at the lower right of Fig. 2). In the parking path, the points Pt1 (x1, y1), Pt2 (x2, y2), Pt3 (x3, y3) and Pt4 (x4, y4) satisfy the following relationship:
> x2 > one half of the width of the battery swap parking space + the minimum turning radius which can be reached by the vehicle, and y2 = y1;
> x3 = x2 - Delta X and y3 = y1, wherein Delta X represents a constant determined according to the movement speed of the vehicle advancing from Pt1 to Pt2; and
> x4 = x3 - the turning radius of the vehicle, and y4 = y2 - the turning radius of the vehicle.

After determining the parking path of Pt1→Pt2→Pt3→Pt4→Pt5 described above, the control unit 102 controls the vehicle to perform the parking operation according to the parking path.

Optionally, in an embodiment, the system 100 may further comprise a display unit 103 configured to display information for prompting a driver to adjust the position of the vehicle if the control unit 102 determines that the vehicle is not located within the parking start area. In an example, the display unit 103 may be a touch display screen, but is not limited thereto, and any component capable of displaying the information for prompting the driver to adjust the position of the vehicle may be used to implement the display unit 103.

Optionally, in an embodiment, the control unit 102 may further be configured to determine whether the vehicle accurately reaches the point Pt4. For example, the control unit 102 may determine whether the vehicle accurately reaches the point Pt4 (x4, y4) in order to ensure that the vehicle can reverse and go straight when traveling near the point Pt4 to safely enter the battery swap parking space. If it is determined that the vehicle does not accurately reach the point Pt4 (x4, y4), an image of the ground around the vehicle is reacquired by the image acquiring unit 101, the position of the vehicle relative to the ground marks extending along the y-axis in Fig. 2 is determined by the control unit 102 based on the reacquired image, and the position is finely adjusted (for example, the position and posture are finely adjusted by moving the vehicle back and forth) so as to allow the vehicle to safely go straight into the battery swap parking space (the vehicle position where the point Pt5 is located at the lower right of Fig. 2), wherein the ground marks extending along the y-axis are determined according to the position of the battery swap parking space (the vehicle position where the point Pt5 is located at the lower right of Fig. 2).

By means of the system for automatically parking the vehicle into the battery swap parking space within the battery swap station, the vehicle is allowed to be quickly, safely and automatically parked into the battery swap station for battery swapping. The system for automatically parking the vehicle into the battery swap parking space within the battery swap station according to an embodiment of the invention may be applied to a pure electric vehicle, a hybrid electric vehicle, or the like.

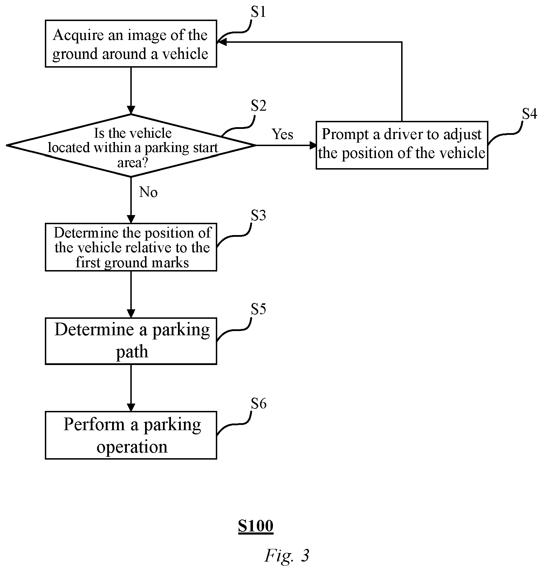

Next, a method for automatically parking a vehicle into a battery swap parking space within a battery swap station according to an embodiment of the invention will be described below with reference to Fig. 3.

As shown in Fig. 3, the method S100 comprises a step (S1) of acquiring an image of the ground around the vehicle. In an example, the image of the ground around the vehicle is acquired by the image acquiring unit such as a camera in the vehicle.

In an embodiment, as shown in Fig. 3, the method 100 may further comprise a step (S2) of determining, on the basis of the acquired image, whether the vehicle is located in a parking start area determined by means of prearranged first ground marks. In an embodiment, the control unit such as an electronic control unit (ECU) in the vehicle determines, on the basis of the acquired image in S 1, whether the vehicle is located in the parking start area determined by means of the prearranged first ground marks.

In an example, as shown in Fig. 3, the method 100 may further comprise a step (S3) of determining the position of the vehicle relative to the first ground marks if it is determined that the vehicle is located in the parking start area. In an embodiment, the step of determining, by the control unit such as the electronic control unit (ECU) in the vehicle, the position of the vehicle relative to the first ground marks if it is determined that the vehicle is located in the parking start area.

In an embodiment, as shown in Fig. 3, the method 100 may further comprise a step (S5) of determining a parking path for traveling from the position to the battery swap parking space within the battery swap station based on the position. In an example, the parking path for traveling from the position determined in S3 to the battery swap station within the battery swap station is determined by the control unit such as the electronic control unit (ECU) in the vehicle based on the position.

In an embodiment, as shown in Fig. 3, the method 100 may further comprise a step (S6) of controlling the vehicle to perform a parking operation according to the parking path. In an example, the vehicle is controlled by the control unit such as the electronic control unit (ECU) in the vehicle to perform the parking operation according to the parking path determined in S5.

The above steps of the method 100 are schematically illustrated in Fig. 2 as an example.

As shown in Fig. 2, the image acquiring unit of the vehicle acquires for example the image of the ground around the vehicle periodically, and the control unit determines, based on the acquired image, whether the vehicle is located in the parking start area determined by means of the prearranged ground marks extending along the x-axis. The parking start area can be characterized for example by the range of values of horizontal and vertical coordinates of Pt1, that is, in the case where the width direction of the battery swap parking space (the vehicle position where a point Pt5 is located at the lower right in Fig. 2) is taken as the x-axis direction and the length direction of the battery swap parking space is taken as the y-axis direction, as long as the vehicle is located in an area defined by x1 min to x1 max and y1 min to y1 max (wherein x1 min, x1 max, y1 min and y1 max are constants), it may be determined that the vehicle is located in the parking start area in which the image acquiring unit can accurately identify the ground marks extending along the x-axis. In addition, with regards to the values of x1 min, x1 max, y1 min and y1 max, upon determining the length and width of the battery swap parking space, the ground marks extending along the x-axis are determined, and x1 min, x1 max, y1 min and y1 max are also determined accordingly.

The position of the vehicle relative to the ground marks extending along the x-axis is determined if it is determined that the vehicle is already located in the parking start area, and the parking path for traveling from the position to the battery swap parking space within the battery swap station is determined based on the position. With regards to the parking path, for example, as shown in Fig. 2, it is assumed that the vehicle is parked at the position of the point Pt1, at this point, it is determined, based on the current position, that the vehicle travels straight in the forward X-axis direction to a point Pt2 (x2, y2) from the current position as a start point, next travels straight in the reverse X-axis direction from the point Pt2 to a point Pt3 (x3, y3), then is driven to a position Pt4 (x4, y4) along a curve trajectory, and finally directly enters the parking path for the battery swap parking space (the vehicle position where the Pt5 point is located at the lower right of Fig. 2). In the parking path, the points Pt1 (x1, y1), Pt2 (x2, y2), Pt3 (x3, y3) and Pt4 (x4, y4) satisfy the following relationship:
> x2 > half of the width of the battery swap parking space + a minimum turning radius which can be reached by the vehicle, and y2 = y1;
> x3 = x2 - Delta X and y3 = y1, wherein Delta X represents a constant determined according to the movement speed of the vehicle advancing from Pt1 to Pt2; and
> x4 = x3 - the turning radius of the vehicle, and y4 = y2 - the turning radius of the vehicle.

After determining the parking path of Pt1→Pt2→Pt3→Pt4→Pt5 described above, the control unit 102 controls the vehicle to perform the parking operation according to the parking path.

Optionally, in an embodiment, the method S 100 may further comprise a step (S4) of displaying information for prompting a driver to adjust the position of the vehicle if it is determined that the vehicle is not located within the parking start area. In an example, the information for prompting the driver to adjust the position of the vehicle is displayed by a display unit such as a touch display screen in the vehicle if it is determined that the vehicle is not located in the parking start area.

Optionally, in an embodiment, the method S 100 may further comprise a step (not shown) of determining whether the vehicle accurately reaches the point Pt4. For example, the control unit such as the electronic control unit (ECU) in the vehicle may determine whether the vehicle accurately reaches the point Pt4 (x4, y4) in order to ensure that the vehicle can reverse and go straight when traveling near the point Pt4 to safely enter the battery swap parking space. If it is determined that the vehicle does not accurately reach the point Pt4 (x4, y4), an image of the ground around the vehicle is reacquired by the image acquiring unit such as a camera in the vehicle, the position of the vehicle relative to the ground marks extending along the y-axis in Fig. 2 is determined by the control unit such as the electronic control unit (ECU) in the vehicle based on the reacquired image, and the position is finely adjusted (for example, the position and posture are finely adjusted by moving the vehicle back and forth) so as to allow the vehicle to safely go straight into the battery swap parking space (the vehicle position where the point Pt5 is located at the lower right of Fig. 2), wherein the ground marks extending along the y-axis are determined according to the position of the battery swap parking space (the vehicle position where the point Pt5 is located at the lower right of Fig. 2).

By means of the method for automatically parking the vehicle into the battery swap parking space within the battery swap station, the vehicle is allowed to be quickly, safely and automatically parked into the battery swap station for battery swapping. The method for automatically parking the vehicle into the battery swap parking space within the battery swap station according to an embodiment of the invention may be applied to a pure electric vehicle, a hybrid electric vehicle, or the like.

It will be appreciated by a person of ordinary skill in the art that the invention is not limited to the embodiments described above and may be embodied in many other forms without departing from the essence or scope thereof. Therefore, the presented examples and implementations are regarded to be schematic rather than restrictive, and without departing from the scope of the invention that are defined by the appended claims, the invention may cover various changes and replacements.

## Claims

1. A system for automatically parking a vehicle into a battery swap parking space within a battery swap station, **characterized by** comprising:
an image acquiring unit (101) configured to acquire an image of the ground around a vehicle;
a control unit (102) configured to determine, on the basis of the acquired image, whether the vehicle is located within a parking start area determined by means of prearranged first ground marks, to determine a position of the vehicle relative to the first ground marks if it is determined that the vehicle is located within the parking start area, to determine, on the basis of the position, a parking path for traveling from the position to the battery swap parking space within the battery swap station, and to control the vehicle to perform a parking operation according to the parking path; and
a display unit (103) configured to display information for prompting a driver to adjust the position of the vehicle if the control unit (102) determines that the vehicle is not located within the parking start area,
wherein the parking start area is an area from x1 min to x1 max and from y1 min and y1 max, with the width direction of the battery swap parking space as an x-axis direction and the length direction of the battery swap parking space as a y-axis direction, and wherein x1 min, x1 max, y1 min and y1 max represent constants determined according to the length and width of the battery swap parking space.

2. The system according to claim 1, **characterized in that**
the parking path comprises advancing from the position Pt1 having the coordinates x1, y1 to a position Pt2 having the coordinates x2, y2, next reversing to a position Pt3 having the coordinates x3, y3, then traveling to a position Pt4 having the coordinates x4, y4 in a curve, and finally traveling straight into the battery swap parking space,
wherein with the width direction of the battery swap parking space as an x-axis direction and the length direction of the battery swap parking space as a y-axis direction, the x1, x2, x3, x4, y1, y2, y3 and y4 satisfy the following relationship: x1 min < x1 < x1 max and y1 min < y1 < y1 max, wherein x1 min, x1 max, y1 min and y1 max represent constants determined according to the length and width of the battery swap parking space;
x2 > half of the width of the battery swap parking space + a minimum turning radius which can be reached by the vehicle, and y2 = y1;
x3 = x2 - Delta X and y3 = y1, wherein Delta X represents a constant determined according to the movement speed of the vehicle advancing from Pt1 to Pt2; and
x4 = x3 - the turning radius of the vehicle, and y4 = y2 - the turning radius of the vehicle.

3. The system according to claim 2, **characterized in that** the control unit (102) is further configured to determine whether the vehicle accurately reaches the position Pt4.

4. The system according to claim 3, **characterized in that** if it is determined that the vehicle does not accurately reach the position Pt4, an image of the ground around the vehicle is reacquired by the image acquiring unit (101), the position of the vehicle relative to second ground marks is determined by the control unit (102) based on the reacquired image, and the position is finely adjusted such that the vehicle is allowed to go straight into the battery swap parking space, wherein the second ground marks are determined on the basis of the position of the battery swap parking space.

5. A method for automatically parking a vehicle into a battery swap parking space within a battery swap station, **characterized by** comprising:
a step of acquiring an image of the ground around the vehicle;
a step of determining, on the basis of the acquired image, whether the vehicle is located in a parking start area determined by means of prearranged first ground marks;
a step of determining the position of the vehicle relative to the first ground marks if it is determined that the vehicle is located in the parking start area;
a step of determining a parking path for traveling from the position to the battery swap parking space within the battery swap station based on the position;
a step of controlling the vehicle to perform a parking operation according to the parking path; and
a step of displaying information for prompting the driver to adjust the position of the vehicle if it is determined that the vehicle is not located in the parking start area,
wherein the parking start area is an area from x1 min to x1 max and from y1 min and y1 max, with the width direction of the battery swap parking space as an x-axis direction and the length direction of the battery swap parking space as a y-axis direction, and wherein x1 min, x1 max, y1 min and y1 max represent constants determined according to the length and width of the battery swap parking space.

6. The method according to claim 5, **characterized in that**
the parking path comprises advancing from the position Pt1 having the coordinates x1, y1 to a position Pt2 having the coordinates x2, y2, next reversing to a position Pt3 having the coordinates x3, y3, then traveling to a position Pt4 having the coordinates x4, y4 in a curve, and finally traveling straight into the battery swap parking space,
wherein with the width direction of the battery swap parking space as an x-axis direction and the length direction of the battery swap parking space as a y-axis direction, the x1, x2, x3, x4, y1, y2, y3 and y4 satisfy the following relationship:
x1 min < x1 < x1 max and y1 min < y1 < y1 max, wherein x1 min, x1 max, y1 min and y1 max represent constants determined according to the length and width of the battery swap parking space;
x2 > half of the width of the battery swap parking space + a minimum turning radius which can be reached by the vehicle, and y2 = y1;
x3 = x2 - Delta X and y3 = y1, wherein Delta X represents a constant determined according to the movement speed of the vehicle advancing from Pt1 to Pt2; and
x4 = x3 - the turning radius of the vehicle, and y4 = y2 - the turning radius of the vehicle.

7. The method according to claim 6, **characterized by** further comprising:
a step of determining whether the vehicle accurately reaches the position Pt4.

8. The method according to claim 7, **characterized in that** if it is determined that the vehicle does not accurately reach the position Pt4, an image of the ground around the vehicle is reacquired, the position of the vehicle relative to second ground marks is determined based on the reacquired image, and the position is finely adjusted such that the vehicle is allowed to go straight into the battery swap parking space, wherein the second ground marks are determined based on the position of the battery swap parking space.

9. An electric vehicle, **characterized by** comprising a system according to any one of claims 1 to 4.

## Patentansprüche

1. System zum automatischen Parken eines Fahrzeugs in einen Batteriewechselparkplatz in einer Batteriewechselstation, **gekennzeichnet durch**
eine Bilderfassungseinheit (101), die konfiguriert ist, ein Bild des Bodens um ein Fahrzeug zu erfassen;
eine Steuereinheit (102), die konfiguriert ist, auf der Grundlage des erfassten Bildes zu bestimmen, ob das Fahrzeug sich in einem Parkstartbereich befindet, der mittels vorher vereinbarter erster Bodenmarkierungen bestimmt ist, um eine Position des Fahrzeugs in Bezug auf die ersten Bodenmarkierungen zu bestimmen, wenn bestimmt wird, dass das Fahrzeug sich im Parkstartbereich befindet, auf der Grundlage der Position einen Parkpfad zum Fahren von der Position zum Batteriewechselparkplatz in der Batteriewechselstation zu bestimmen und das Fahrzeug zu steuern, eine Parkoperation gemäß dem Parkpfad durchzuführen; und
eine Anzeigeeinheit (103), die konfiguriert ist, Informationen zum Auffordern eines Fahrers, die Position des Fahrzeugs anzupassen, anzuzeigen, wenn die Steuereinheit (102) bestimmt, dass das Fahrzeug sich nicht im Parkstartbereich befindet, wobei
der Parkstartbereich ein Bereich von x1 min bis x1 max und von y1 min und y1 max mit der Breitenrichtung des Batteriewechselparkplatzes als eine x-Achsen-Richtung und der Längsrichtung des Batteriewechselparkplatzes als eine y-Achsen-Richtung ist und x1 min, x1 max, y1 min und y1 max Konstanten repräsentieren, die gemäß der Länge und der Breite des Batteriewechselparkplatzes bestimmt sind.

2. System nach Anspruch 1, **dadurch gekennzeichnet, dass**
der Parkpfad ein Bewegen von der Position Pt1, die die Koordinaten x1, y1 besitzt, zu einer Position Pt2, die die Koordinaten x2, y2 besitzt, dann ein Umkehren zu einer Position Pt3, die die Koordinaten x3, y3 besitzt, dann ein Fahren in einer Kurve zu einer Position Pt4, die die Koordinaten x4, y4 besitzt, und schließlich ein Geradeausfahren in den Batteriewechselparkplatz aufweist, wobei
mit der Breitenrichtung des Batteriewechselparkplatzes als eine x-Achsen-Richtung und der Längsrichtung des Batteriewechselparkplatzes als eine y-Achsen-Richtung x1, x2, x3, x4, y1, y2, y3 und y4 die folgende Beziehung erfüllen:
x1 min < x1 < x1 max und y1 min < y1 < y1 max, wobei x1 min, x1 max, y1 min und y1 max Konstanten repräsentieren, die gemäß der Länge und der Breite des Batteriewechselparkplatzes bestimmt sind;
x2 > die Hälfte der Breite des Batteriewechselparkplatzes + ein minimaler Wenderadius, der durch das Fahrzeug erreicht werden kann, und y2 = y1, x3 = x2 - Delta X und y3 = y1, wobei Delta X eine Konstante repräsentiert, die gemäß der Bewegungsgeschwindigkeit des Fahrzeugs, das sich von Pt1 bis Pt2 bewegt, bestimmt ist; und
x4 = x3 - der Wenderadius des Fahrzeugs und y4 = y2 - der Wenderadius des Fahrzeugs ist.

3. System nach Anspruch 2, **dadurch gekennzeichnet, dass** die Steuereinheit (102) ferner konfiguriert ist, zu bestimmen, ob das Fahrzeug die Position Pt4 genau erreicht.

4. System nach Anspruch 3, **dadurch gekennzeichnet, dass** dann, wenn bestimmt wird, dass das Fahrzeug die Position Pt4 nicht genau erreicht, ein Bild des Bodens um das Fahrzeug durch die Bilderfassungseinheit (101) erneut erfasst wird, die Position des Fahrzeugs in Bezug auf zweite Bodenmarkierungen durch die Steuereinheit (102) auf der Grundlage des erneut erfassten Bildes bestimmt wird und die Position fein eingestellt wird, derart, dass dem Fahrzeug ermöglicht wird, gerade in den Batteriewechselparkplatz zu fahren, wobei die zweiten Bodenmarkierungen auf der Grundlage der Position des Batteriewechselparkplatzes bestimmt sind.

5. Verfahren zum automatischen Parken eines Fahrzeugs in einen Batteriewechselparkplatz in einer Batteriewechselstation, **gekennzeichnet durch**
einen Schritt des Erfassens eines Bildes des Bodens um das Fahrzeug;
einen Schritt des Bestimmens auf der Grundlage des erfassten Bilds, ob das Fahrzeug sich in einem Parkstartbereich befindet, der mittels vorher vereinbarter erster Bodenmarkierungen bestimmt ist;
einen Schritt des Bestimmens der Position des Fahrzeugs in Bezug auf die ersten Bodenmarkierungen, wenn bestimmt wird, dass das Fahrzeug sich im Parkstartbereich befindet;
einen Schritt des Bestimmens eines Parkpfads zum Fahren von der Position zum Batteriewechselparkplatz in der Batteriewechselstation auf der Grundlage der Position;
einen Schritt des Steuerns des Fahrzeugs, eine Parkoperation gemäß dem Parkpfad durchzuführen; und
einen Schritt des Anzeigens von Informationen zum Auffordern des Fahrers, die Position des Fahrzeugs anzupassen, wenn bestimmt wird, dass das Fahrzeug sich nicht im Parkstartbereich befindet, wobei
der Parkstartbereich ein Bereich von x1 min bis x1 max und von y1 min und y1 max mit der Breitenrichtung des Batteriewechselparkplatzes als eine x-Achsen-Richtung und der Längsrichtung des Batteriewechselparkplatzes als eine y-Achsen-Richtung ist und x1 min, x1 max, y1 min und y1 max Konstanten repräsentieren, die gemäß der Länge und der Breite des Batteriewechselparkplatzes bestimmt sind.

6. Verfahren nach Anspruch 5, **dadurch gekennzeichnet, dass**
der Parkpfad ein Bewegen von der Position Pt1, die die Koordinaten x1, y1 besitzt, zu einer Position Pt2, die die Koordinaten x2, y2 besitzt, dann ein Umkehren zu einer Position Pt3, die die Koordinaten x3, y3 besitzt, dann ein Fahren in einer Kurve zu einer Position Pt4, die die Koordinaten x4, y4 besitzt, und schließlich ein Geradeausfahren in den Batteriewechselparkplatz aufweist, wobei
mit der Breitenrichtung des Batteriewechselparkplatzes als eine x-Achsen-Richtung und der Längsrichtung des Batteriewechselparkplatzes als eine y-Achsen-Richtung x1, x2, x3, x4, y1, y2, y3 und y4 die folgende Beziehung erfüllen:
x1 min < x1 < x1 max und y1 min < y1 < y1 max, wobei x1 min, x1 max, y1 min und y1 max Konstanten repräsentieren, die gemäß der Länge und der Breite des Batteriewechselparkplatzes bestimmt sind;
x2 > die Hälfte der Breite des Batteriewechselparkplatzes + ein minimaler Wenderadius, der durch das Fahrzeug erreicht werden kann, und y2 = y1;
x3 = x2 - Delta X und y3 = y1, wobei Delta X eine Konstante repräsentiert, die gemäß der Bewegungsgeschwindigkeit des Fahrzeugs, das sich von Pt1 bis Pt2 bewegt, bestimmt ist; und
x4 = x3 - der Wenderadius des Fahrzeugs und y4 = y2 - der Wenderadius des Fahrzeugs.

7. Verfahren nach Anspruch 6, das ferner **gekennzeichnet ist durch**
einen Schritt des Bestimmens, ob das Fahrzeug die Position Pt4 genau erreicht.

8. Verfahren nach Anspruch 7, **dadurch gekennzeichnet, dass** dann, wenn bestimmt wird, dass das Fahrzeug die Position Pt4 nicht genau erreicht, ein Bild des Bodens um das Fahrzeug erneut erfasst wird, die Position des Fahrzeugs in Bezug auf zweite Bodenmarkierungen auf der Grundlage des erneut erfassten Bildes bestimmt wird und die Position fein eingestellt wird, derart, dass dem Fahrzeug ermöglicht wird, gerade in den Batteriewechselparkplatz zu fahren, wobei die zweiten Bodenmarkierungen auf der Grundlage der Position des Batteriewechselparkplatzes bestimmt sind.

9. Elektrofahrzeug, **gekennzeichnet durch** ein System nach einem der Ansprüche 1 bis 4.

## Revendications

1. Système pour stationner automatiquement un véhicule dans un espace de stationnement d'échange de batterie à l'intérieur d'une station d'échange de batterie, caractérisé en qu'il comprend :
une unité d'acquisition d'image (101) configurée pour acquérir une image du sol autour d'un véhicule ;
une unité de commande (102) configurée pour déterminer, sur la base de l'image acquise, si le véhicule est situé ou non à l'intérieur d'une zone de départ de stationnement déterminée au moyen de premières marques au sol préagencées, pour déterminer une position du véhicule par rapport aux premières marques au sol s'il est déterminé que le véhicule est situé à l'intérieur de la zone de départ de stationnement, pour déterminer, sur la base de la position, un trajet de stationnement pour un déplacement de la position à l'espace de stationnement d'échange de batterie à l'intérieur de la station d'échange de batterie, et pour commander le véhicule pour réaliser une opération de stationnement en fonction du trajet de stationnement ; et
une unité d'affichage (103) configurée pour afficher des informations pour inviter un conducteur à ajuster la position du véhicule si l'unité de commande (102) détermine que le véhicule n'est pas situé à l'intérieur de la zone de départ de stationnement,
dans lequel la zone de départ de stationnement est une zone de x1 min à x1 max et de y1 min à y1 max, avec la direction de largeur de l'espace de stationnement d'échange de batterie comme direction d'axe x et la direction de longueur de l'espace de stationnement d'échange de batterie comme direction d'axe y, et dans lequel x1 min, x1 max, y1 min et y1 max représentent des constantes déterminées en fonction de la longueur et de la largeur de l'espace de stationnement d'échange de batterie.

2. Système selon la revendication 1, **caractérisé en ce que**
le trajet de stationnement comprend l'avancement de la position Pt1 ayant les coordonnées x1, y1 à une position Pt2 ayant les coordonnées x2, y2, puis la marche arrière vers une position Pt3 ayant les coordonnées x3, y3, puis le déplacement vers une position Pt4 ayant les coordonnées x4, y4 en courbe, et enfin le déplacement en ligne droite vers l'espace de stationnement d'échange de batterie,
dans lequel avec la direction de largeur de l'espace de stationnement d'échange de batterie comme direction d'axe x et la direction de longueur de l'espace de stationnement d'échange de batterie comme direction d'axe y, x1, x2, x3, x4, y1, y2, y3 et y4 satisfont à la relation suivante :
x1 min < x1 < x1 max et y1 min < y1 < y1 max, dans lequel x1 min, x1 max, y1 min et y1 max représentent des constantes déterminées en fonction de la longueur et de la largeur de l'espace de stationnement d'échange de batterie ;
x2 > la moitié de la largeur de l'espace de stationnement d'échange de batterie + un rayon de braquage minimal qui peut être atteint par le véhicule, et y2 = y1 ;
x3 = x2 - Delta X et y3 = y1, dans lequel Delta X représente une constante déterminée en fonction de la vitesse de déplacement du véhicule avançant de Pt1 à Pt2 ; et
x4 = x3 - le rayon de braquage du véhicule, et y4 = y2 - le rayon de braquage du véhicule.

3. Système selon la revendication 2, **caractérisé en ce que** l'unité de commande (102) est en outre configurée pour déterminer si le véhicule atteint ou non précisément la position Pt4.

4. Système selon la revendication 3, **caractérisé en ce que** s'il est déterminé que le véhicule n'atteint pas précisément la position Pt4, une image du sol autour du véhicule est réacquise par l'unité d'acquisition d'image (101), la position du véhicule par rapport à des secondes marques au sol est déterminée par l'unité de commande (102) sur la base de l'image réacquise, et la position est ajustée avec précision de telle sorte que le véhicule est autorisé à se déplacer en ligne droite vers l'espace de stationnement d'échange de batterie, dans lequel les secondes marques au sol sont déterminées sur la base de la position de l'espace de stationnement d'échange de batterie.

5. Procédé de stationnement automatique d'un véhicule dans un espace de stationnement d'échange de batterie à l'intérieur d'une station d'échange de batterie, **caractérisé en ce qu'**il comprend :
une étape d'acquisition d'une image du sol autour du véhicule ;
une étape de détermination, sur la base de l'image acquise, si le véhicule est situé ou non dans une zone de départ de stationnement déterminée au moyen de premières marques au sol préagencées ;
une étape de détermination de la position du véhicule par rapport aux premières marques au sol s'il est déterminé que le véhicule est situé dans la zone de départ de stationnement ;
une étape de détermination d'un trajet de stationnement pour se déplacer de la position à l'espace de stationnement d'échange de batterie à l'intérieur de la station d'échange de batterie sur la base de la position ;
une étape de commande du véhicule pour réaliser une opération de stationnement en fonction du trajet de stationnement ; et
une étape d'affichage d'informations pour inviter le conducteur à ajuster la position du véhicule s'il est déterminé que le véhicule n'est pas situé dans la zone de départ de stationnement,
dans lequel la zone de départ de stationnement est une zone de x1 min à x1 max et de y1 min à y1 max, avec la direction de largeur de l'espace de stationnement d'échange de batterie comme direction d'axe x et la direction de longueur de l'espace de stationnement d'échange de batterie comme direction d'axe y, et dans lequel x1 min, x1 max, y1 min et y1 max représentent des constantes déterminées en fonction de la longueur et de la largeur de l'espace de stationnement d'échange de batterie.

6. Procédé selon la revendication 5, **caractérisé en ce que**
le trajet de stationnement comprend l'avancement de la position Pt1 ayant les coordonnées x1, y1 à une position Pt2 ayant les coordonnées x2, y2, puis la marche arrière vers une position Pt3 ayant les coordonnées x3, y3, puis le déplacement vers une position Pt4 ayant les coordonnées x4, y4 en courbe, et enfin le déplacement en ligne droite vers l'espace de stationnement d'échange de batterie,
dans lequel avec la direction de largeur de l'espace de stationnement d'échange de batterie comme direction d'axe x et la direction de longueur de l'espace de stationnement d'échange de batterie comme direction d'axe y, x1, x2, x3, x4, y1, y2, y3 et y4 satisfont à la relation suivante :
x1 min < x1 < x1 max et y1 min < y1 < y1 max, dans lequel x1 min, x1 max, y1 min et y1 max représentent des constantes déterminées en fonction de la longueur et de la largeur de l'espace de stationnement d'échange de batterie ;
x2 > la moitié de la largeur de l'espace de stationnement d'échange de batterie + un rayon de braquage minimal qui peut être atteint par le véhicule, et y2 = y1 ;
x3 = x2 - Delta X et y3 = y1, dans lequel Delta X représente une constante déterminée en fonction de la vitesse de déplacement du véhicule avançant de Pt1 à Pt2 ; et
x4 = x3 - le rayon de braquage du véhicule, et y4 = y2 - le rayon de braquage du véhicule.

7. Procédé selon la revendication 6, **caractérisé en ce qu'**il comprend en outre :
une étape de détermination si le véhicule atteint ou non précisément la position Pt4.

8. Procédé selon la revendication 7, **caractérisé en ce que** s'il est déterminé que le véhicule n'atteint pas précisément la position Pt4, une image du sol autour du véhicule est réacquise, la position du véhicule par rapport à des secondes marques au sol est déterminée sur la base de l'image réacquise, et la position est ajustée avec précision de telle sorte que le véhicule est autorisé à se déplacer en ligne droite vers l'espace de stationnement d'échange de batterie, dans lequel les secondes marques au sol sont déterminées sur la base de la position de l'espace de stationnement d'échange de batterie.

9. Véhicule électrique, **caractérisé en ce qu'**il comprend un système selon l'une quelconque des revendications 1 à 4.
